# EUROPEAN PATENT APPLICATION

(11) **EP 4 641 051 A1**
(43) Date of publication of application: **29.10.2025**
(21) Application number: 23906782.0
(22) Date of filing: 08.12.2023
(51) Int. Cl.: F16J 15/10, F16J 15/12

(54) **SEALING DEVICE**

(30) Priority: 19.12.2022 JP 2022201885
(71) Applicant: NOK Corporation, Minato-ku Tokyo 105-8585 (JP)
(72) Inventor: KISHIRO Masamichi, Fukushima-shi, Fukushima 960-1193 (JP); MEGURO Naoki, Fukushima-shi, Fukushima 960-1193 (JP)
(74) Representative: TBK
(86) International application number: PCT/JP2023/044070
(87) International publication number: WO 2024/135416

(57) **Abstract**

A sealing device that can secure sealing performance between two members that are eccentrically connected is provided. A sealing device (4) seals between a first tube-shaped portion (21), and a second tube-shaped portion (31) that is inserted into the first tube-shaped portion (21). The sealing device (4) includes an elastic body portion (41) in a tubular shape that is along the first tube-shaped portion (21) and the second tube-shaped portion (31). The elastic body portion (41) has at least two lip portions (413, 414) that respectively extend along a circumferential direction and are aligned at a predetermined interval in an extension direction (Z direction) of a tube, on an inner peripheral surface (412A) in contact with the second tube-shaped portion (31).

## Description

### Technical Field

The present invention relates to a sealing device.

### Background Art

Conventionally, there has been proposed a gasket that is used for a piping connection structure that connects a cooling pipe of a cooler that cools electronic equipment for automobile by a refrigerant and an external hose (for example, see Patent Literature 1). The gasket described in Patent Literature 1 suppresses an effect of eccentricity on seal surface pressure by preventing the inner seal region where the inner peripheral lip portion is placed, and the outer seal region where the outer peripheral lip portion is placed from overlapping.

### Document List

### Patent Literature

Patent Literature 1: Japanese Patent Application Publication No. 2020-41634

### Summary of Invention

### Technical Problem

In the gasket described in Patent Literature 1, the lip portions are disposed as described above, in order to cope with eccentricity that occurs due to vibration or the like between the two members to be connected. However, in the first place, the tubular portions of the two members may be connected in an eccentric state. In the structure like this, there is a risk of being unable to sufficiently secure sealing performance with the disposition of the lip portions as described in Patent Literature 1. That is to say, when a tube portion with a small diameter is eccentrically inserted into a tube portion with a large diameter, and a sealing device that is not eccentric is disposed in the gap between them, the compression amount of the elastic member differs between the parts where the gap between the tubular portions is small and large, and a side which foreign matter easily enters can be formed.

The present invention is made in view of the aforementioned problem, and it is an object of the present invention to provide a sealing device that can secure sealing performance between two members that are eccentrically connected.

### Solution to Problem

In order to achieve the above-described object, a sealing device according to the present invention is a sealing device that seals between a first tube-shaped portion, and a second tube-shaped portion that is inserted into the first tube-shaped portion, and includes an elastic body portion in a tubular shape that is along the first tube-shaped portion and the second tube-shaped portion, wherein the elastic body portion has at least two lip portions that respectively extend along a circumferential direction and are aligned at a predetermined interval in an extension direction of a tube, on an inner peripheral surface that is in contact with the second tube-shaped portion.

In the sealing device according to one aspect of the present invention, a reinforcement member that is embedded in the elastic body portion is included.

### Effects of Invention

According to a sealing device of the present invention, it is possible to secure sealing performance between two members that are eccentrically connected.

### Brief Description of Drawings

[Fig. 1] A sectional view of a sealing structure according to an embodiment of the present invention.
[Fig. 2] A sectional view of a first member and a second member for which the sealing structure according to the embodiment of the present invention is formed.
[Fig. 3] A sectional view of a sealing device provided in the sealing structure according to the embodiment of the present invention.
[Fig. 4] A sectional view showing a state in which an elastic body portion is deformed in the sealing device provided in the sealing structure according to the embodiment of the present invention.

### Description of Embodiments

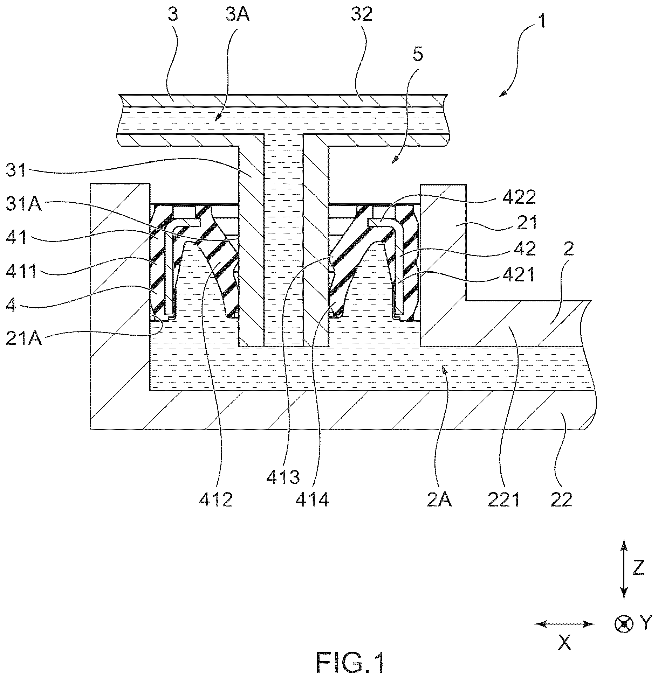

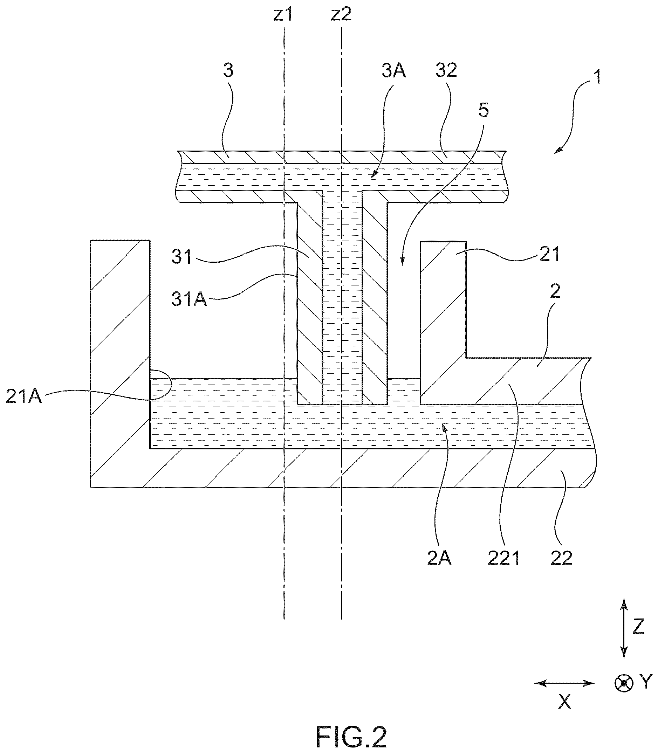

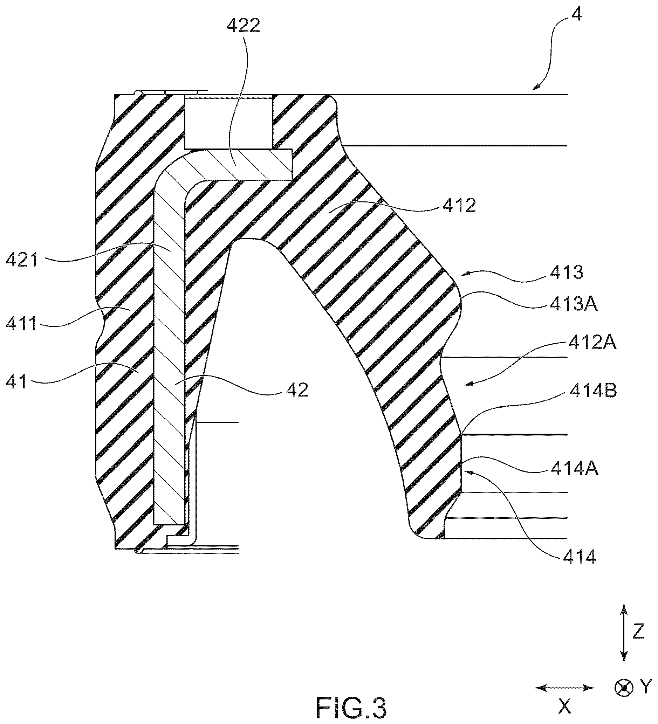

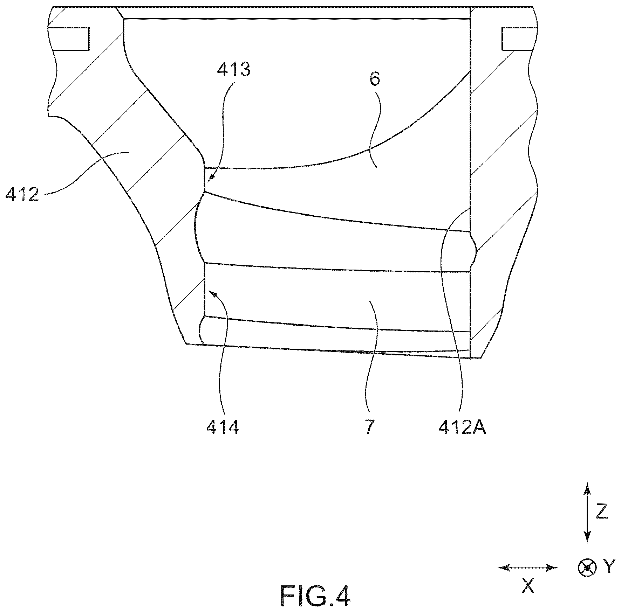

Hereinafter, an embodiment of the present invention will be described with reference to the drawings. Fig. 1 is a sectional view of a sealing structure 1 according to an embodiment of the present invention, Fig. 2 is a sectional view of a first member 2 and a second member 3 for which the sealing structure 1 is formed, Fig. 3 is a sectional view of a sealing device 4 provided in the sealing structure 1, Fig. 4 is a sectional view showing a state in which an elastic body portion 41 is deformed in the sealing device 4 provided in the sealing structure 1.

As shown in Fig. 1, the sealing device 4 provided in the sealing structure 1 according to the embodiment of the present invention seals between a first tube-shaped portion 21 and a second tube-shaped portion 31 that is inserted into the first tube-shaped portion 21. The sealing device 4 includes an elastic body portion 41 in a tube shape that is along the first tube-shaped portion 21 and the second tube-shaped portion 31. The elastic body portion 41 has at least two lip portions 413 and 414 that respectively extend along a circumferential direction and are aligned at a predetermined interval in an extension direction (Z direction) of a tube, on an inner peripheral surface 412A that is in contact with the second tube-shaped portion 31.

The first member 2 and the second member 3 form a cooling apparatus that is mounted on, for example, a vehicle and is for cooling a heat generating part such as an inverter. That is to say, the first member 2 and the second member 3 form fluid flow paths 2A and 3A for cooling water as a fluid to pass through. In the present embodiment, the second member 3 is provided inside the inverter, and the first member 2 is provided outside the inverter to thereby form a housing of the cooling apparatus, but they are not limited to the disposition like this.

The first member 2 integrally has the first tube-shaped portion 21 and a flow path forming portion 22. The first tube-shaped portion 21 is formed in a cylindrical shape, and continues to one end 221 of the flow path forming portion 22. The flow path forming portion 22 is formed in a tubular shape, and extends to be orthogonal to the first tube-shaped portion 21. Inside the first tube-shaped portion 21 and the flow path forming portion 22, the fluid flow path 2A through which cooling water can pass is formed.

Hereinafter, for convenience of explanation, the extension direction of the first tube-shaped portion 21 (direction along a central axis line) is defined as the Z direction (up-down direction in Fig. 1), an extension direction of the flow path forming portion 22 is defined as an X direction (left-right direction in Fig. 1), and a direction orthogonal to both the Z direction and the X direction is defined as a Y direction (vertical direction to page space in Fig. 1). Furthermore, in the first tube-shaped portion 21, a direction from the flow path forming portion 22 toward an opposite side thereto is defined as an upper side in the Z direction, and an opposite direction thereto is defined as a lower side in the Z direction (these "upper" and "lower" do not have to coincide with upper and lower in the vertical direction). Furthermore, in the flow path forming portion 22, a direction toward the first tube-shaped portion 21 is defined as one side (left side in Fig. 1) in the X direction, and an opposite direction thereto is defined as the other side (right side in Fig. 1) in the X direction.

The second member 3 integrally has the second tube-shaped portion 31 and a flow path forming portion 32. The second tube-shaped portion 31 is formed in a cylindrical shape extending in the Z direction, and is connected to a middle portion of the flow path forming portion 32. The flow path forming portion 32 is formed in a tubular shape, and extends in the X direction so as to be orthogonal to the second tube-shaped portion 31. That is to say, the second tube-shaped portion 31 extends so as to branch from the flow path forming portion 32, and a connection portion in a T-shape is formed. Inside the second tube-shaped portion 31 and the flow path forming portion 32, a fluid flow path 3A through which the cooling water can pass is formed.

An outside diameter of the second tube-shaped portion 31 is smaller than an inside diameter of the first tube-shaped portion 21, and the second tube-shaped portion 31 is inserted through the first tube-shaped portion 21. At this time, as shown in Fig. 2, a central axis line z2 of the second tube-shaped portion 31 is located at the other side in the X direction with respect to a central axis line z1 of the first tube-shaped portion 21. That is to say, the first tube-shaped portion 21 and the second tube-shaped portion 31 are eccentric. Note that in Fig. 1, for convenience of explanation, such eccentricity is omitted in the drawing. An eccentricity amount can be, for example, 2.5 mm TIR.

As a result of the second tube-shaped portion 31 is inserted into the first tube-shaped portion 21, the fluid flow path 2A of the first member 2 and the fluid flow path 3A of the second member 3 communicate with each other. At this time the first member 2 and the second member 3 are fixed to be incapable of relative movement (including linear movement and rotational movement).

The sealing device 4 is a gasket formed in a cylindrical shape as a whole, and has the elastic body portion 41 and a reinforcement member 42. The sealing device 4 is disposed in a gap 5 in a tubular shape that is formed between the first tube-shaped portion 21 and the second tube-shaped portion 31, and seals the gap 5.

An elastic body forming the elastic body portion 41 can be, for example, synthetic rubber such as nitrile butadiene rubber (NBR), hydrogenated nitrile butadiene rubber (H-NBR), acrylic rubber (ACM), and fluororubber (FKM). Though the elastic body portion 41 deforms as described later as the sealing device 4 is disposed in the gap 5, a shape before deformation will first be described based on Fig. 3.

The elastic body portion 41 is formed in a cylindrical shape as a whole, and has an outer tube-shaped portion 411 and an inner tube-shaped portion 412. The outer tube-shaped portion 411 is a fixed portion that is fixed to an inner peripheral surface 21A of the first tube-shaped portion 21. The inner tube-shaped portion 412 continues to an end portion on the upper side in the Z direction of the outer tube-shaped portion 411, and extends so as to be closer to a center of the tube as it progresses toward the lower side.

The inner tube-shaped portion 412 has the two lip portions 413 and 414 on an inner peripheral surface 412A. At this time, the inner peripheral surface 412A of the inner tube-shaped portion 412 is also an inner peripheral surface of the entire elastic body portion 41. The lip portions 413 and 414 are formed in an annular shape by extending along a circumferential direction with respect to an axis line along the Z direction. The lip portion 413 on the upper side has an apex portion 413A so as to linearly contact the outer peripheral surface 31A. The lip portion 414 on the lower side has a contact surface portion 414A having a predetermined Z-direction dimension so as to planarly contact the outer peripheral surface 31A. In an undeformed state before the sealing device 4 is attached to the gap 5, the apex portion 413A and an upper end portion 414B of the contact surface portion 414A are disposed with an interval that is greater than or equal to an expected size of foreign matter, in the Z direction. For example, when a length of the foreign matter is 1 mm, it is preferable that the interval of the apex portion 413A and the upper end portion 414B is 1 mm or more, and when the length of the foreign matter is 2 mm, it is preferable that the interval between the apex portion 413A and the upper end portion 414B is 2 mm or more.

The reinforcement member 42 integrally has a tubular portion 421 in a cylindrical shape extending in the Z direction, and a flange portion 422 in an annular shape along an XY plane, and is formed in an L-shape in section. The tubular portion 421 is embedded in the outer tube-shaped portion 411 of the elastic body portion 41. The flange portion 422 is connected to an upper end portion of the tubular portion 421 to extend toward an inner periphery side, and is disposed in a connection portion of the outer tube-shaped portion 411 and the inner tube-shaped portion 412.

When the sealing device 4 as above is disposed in the gap 5 between the first tube-shaped portion 21 and the second tube-shaped portion 31 which are eccentric, the outer tube-shaped portion 411 of the sealing device 4 is fixed to the inner peripheral surface 21A of the first tube-shaped portion 21. At this time, the lip portions 413 and 414 contact the outer peripheral surface 31A of the second tube-shaped portion 31 throughout an entire circumference. Furthermore, due to the above eccentricity, as shown in Fig. 4, the elastic body portion 41 of the sealing device 4 is more easily compressed as it is located in a position closer to the other side in the X direction where the first tube-shaped portion 21 and the second tube-shaped portion 31 are disposed to be closer to each other. As a result, of the inner tube-shaped portion 412, in particular, a portion on the other side in the X direction deforms so as to be close to the outer tube-shaped portion 411, and of the lip portions 413 and 414, in particular, part on the other side in the X-direction is easily compressed. The lip portions 413 and 414 respectively have contact regions 6 and 7 that are in contact with the outer peripheral surface 31A, and in particular, the contact region 6 enlarges as it progresses from the one side in the X direction to the other side.

In the lip portion 413, a contact width (Z-direction size) is minimum at the one side in the X direction, and a minimum contact width is, for example, 0.6 mm. In the lip portion 414, a contact width (Z-direction size) is minimum on the one side in the X direction, and a minimum contact width is, for example, 1.6 mm.

The lip portions 413 and 414 obtain high contact pressure on the other side in the X direction, and foreign matter is difficult to pass therethrough. In contrast, on the one side in the X direction, the contact pressure of the lip portions 413 and 414 is relatively small, but deformation amounts of the lip portions 413 and 414 are small, and therefore a gap is easily formed between them. As described above, since in the state before deformation, the interval between the apex portion 413A and the upper end portion 414B is larger than or equal to the expected size of the foreign matter, and the deformation amount is small on the one side in the X direction, the gap like this is easily maintained. Accordingly, even when foreign matter passes through one (in particular, the lip portion 413 on the upper side) of the two lip portions 413 and 414 on the one side in the X direction, the foreign matter is restrained from being bitten simultaneously with respect to the two lip portions 413 and 414. That is to say, the other one of the two lip portions 413 and 414 maintains contact with the outer peripheral surface 31A over the entire circumference, and easily maintains sealability.

As above, according to the sealing device 4 provided in the sealing structure 1 according to the embodiment of the present invention, the elastic body portion 41 of the sealing device 4 has the two lip portions 413 and 414 that are aligned at the predetermined interval in the Z direction, and thereby it is possible to secure sealing performance between the first member 2 and the second member 3 as the two members that are eccentrically connected.

Note that the present invention is not limited to the above-described embodiment, includes other configurations and the like that can achieve an object of the present invention, and modifications or the like shown as follows are also included in the present invention. For example, although in the above-described embodiment, the sealing device 4 has the reinforcement member 42, the reinforcement member may be omitted depending on the material of the elastic body portion, size of each portion, or the like.

Furthermore, in the above-described embodiment, lip shapes in which the lip portion 413 linearly contacts the outer peripheral surface 31A, and the lip portion 414 planarly contacts the outer peripheral surface 31A are respectively included, but the contact modes of the lip portions are not particularly limited, and for example, the two lip portions may both contact it linearly, or both contact it planarly.

Furthermore, in the above-described embodiment, the elastic body portion 41 has the two lip portions 413 and 414, but the elastic body portion may have three or more lip portions. At this time, the three or more lip portions may include two lip portions adjacent to each other at a predetermined interval (for example, 1.3 mm or more in the above-described embodiment).

Although the embodiment of the present invention is described above, the present invention is not limited to the sealing structure according to the embodiment of the present invention described above but includes all aspects included in the concepts and the claims of the present invention. Furthermore, in order to solve or provide at least part of the above-described problems and effects, various configurations may be selectively combined as appropriate. For example, the shape, material, disposition, size and the like of each component in the above-described embodiment can be properly changed according to a specific usage mode of the present invention.

### List of Reference Signs

1 sealing structure,
2 first member,
21 first tube-shaped portion,
21A inner peripheral surface,
22 flow path forming portion,
221 one end,
2A, 3A fluid flow path,
3 second member,
31 second tube-shaped portion,
31A outer peripheral surface,
32 flow path forming portion,
4 sealing device,
41 elastic body portion,
411 outer tube-shaped portion,
412 inner tube-shaped portion,
413, 414, lip portion,
413A apex portion,
414A contact surface portion,
414B upper end portion,
42 reinforcement member,
421 tubular portion,
422 flange portion,
5 gap,
6, 7 contact region

## Claims

1. A sealing device that seals between a first tube-shaped portion, and a second tube-shaped portion that is inserted into the first tube-shaped portion, comprising:
an elastic body portion in a tubular shape that is along the first tube-shaped portion and the second tube-shaped portion, wherein
the elastic body portion has at least two lip portions that respectively extend along a circumferential direction and are aligned at a predetermined interval in an extension direction of a tube, on an inner peripheral surface that is in contact with the second tube-shaped portion.

2. The sealing device according to claim 1, comprising a reinforcement member that is embedded in the elastic body portion.
